# EUROPEAN PATENT APPLICATION

(11) **EP 2 053 611 A1**
(43) Date of publication of application: **29.04.2009**
(21) Application number: 07119431.0
(22) Date of filing: 26.10.2007
(51) Int. Cl.: G11B 27/11, G11B 23/00, G11B 20/00

(54) **Storage medium as well as method and device for accessing content comprised in said storage medium**

(71) Applicant: Deutsche Thomson OHG, 30625 Hannover (DE)
(72) Inventor: Winter, Marco, 30659 Hannover (DE)
(74) Representative: Rittner, Karsten

(57) **Abstract**

The invention is related to a storage medium as well as to a suitable method and a suitable device for accessing content comprised in said storage medium.

Said storage medium comprises first storage means for carrying content and second storage means for carrying meta-data wherein the meta-data is adapted for preparing a suitable device for accessing the content.

In separating content and set-up data for accessing said content, the storage medium allows the set-up data to be stored in fast accessible storage means.

A device adapted for accessing said content comprised in said storage medium comprises means for accessing the content, means for reading the meta-data and means for preparing said content accessing means by help of said meta-data.

## Description

### Background

The invention is related to a storage medium as well as a suitable method and a suitable device for accessing content comprised in said storage medium.

There are a lot of storage media on the market, e.g. DVD, BD, HD-DVD, CD, Mini Disk etc. The famous property of such storage media is their ability to carry huge amount of data at very low costs per Gigabyte. This allows for storing, for instance, videos with high resolution, interactive videos, computer games and the like on such media.

But, booting up such disks in a corresponding disk drive is time consuming. That is, there is the need for spinning-up the disk into a stable rotation. After that, the disk type (e.g. CD, DVD, or BD) has to be detected and an area containing file system information needs to be found, accessed and read. Then, by help of said disk type and said file system information pay load content on the disk (e.g. AV data, multimedia data or interactive data) becomes accessible. But, as the pay load content is contained in another area of the disk, a time consuming movement of a reading head of the disk drive to the other area is required prior to actually accessing the payload content.

Therefore, a boot-up process usually requires up to several seconds for a (newly inserted) typical disk.

Even a spontaneous access to the file system of such disks during playback/interaction requires a time consuming jump to the file system area and back to the video stream. To avoid such jumps the whole file system data may be read and memorized by the disk drive at the beginning. But, this requires respective memory capacities in the disk drive and increases the boot-up time even more.

Thus, there is a need for reducing the time elapsing prior to actually accessing the payload content.

### Invention

This is met by a storage medium, a method and a device, each comprising the features of the respective independent claim.

Said storage medium comprises first storage means for carrying content and second storage means for carrying meta-data wherein the meta-data is adapted for preparing a suitable device for accessing the content.

In separating content and set-up data for accessing said content, the storage medium allows the set-up data to be stored in fast accessible storage means.

A method for accessing said content comprised in said storage medium comprises reading the meta-data, preparing an accessing device by help of said meta-data and accessing the content by help of said prepared accessing device.

A device adapted for accessing said content comprised in said storage medium comprises means for accessing the content, means for reading the meta-data and means for preparing said content accessing means by help of said meta-data.

In a further embodiment of the storage medium, the second storage means comprises a transponder and the first storage means comprises an optical disk.

A transponder allows for instantaneous wireless access while an optical disk is adapted for carrying huge data amounts.

In a corresponding further embodiment of said accessing method the step of reading meta-data comprises establishing a radio link with the transponder.

A corresponding embodiment of the accessing device comprises means for establishing a radio link with a transponder.

In even a further embodiment of the storage medium, the meta-data is compressed.

Correspondingly, in an even a further embodiment of said accessing method the step of reading meta-data comprises reading compressed data and decompressing the compressed data.

And, an even a further embodiment of said accessing device comprises means for decompressing compressed data.

In yet a further embodiment of the storage medium, the second storage means is writable such that a user is allowed to bookmark the content.

Then, the first storage means may be read-only while a user is still allowed for indexing favoured content.

In a corresponding yet a further embodiment of said accessing method the step of storing a user defined bookmark in the second storage means is further comprised.

A corresponding yet a further embodiment of said accessing device comprises means for writing a bookmark to said second storage means.

In another embodiment of the storage medium, the meta-data comprises boot-up information related to the first storage means, file system information related to the first storage means and/or an menu information related the content. Drawings Exemplary embodiments of the invention are illustrated in the drawings and are explained in more detail in the following description.

### In the figures:

- Fig. 1: shows an exemplary embodiment of the inventive storage medium,
- Fig. 2a and 2b: show other exemplary embodiments of the inventive storage medium and
- Fig. 3: shows an exemplary embodiment of the inventive accessing device.

### Exemplary embodiments

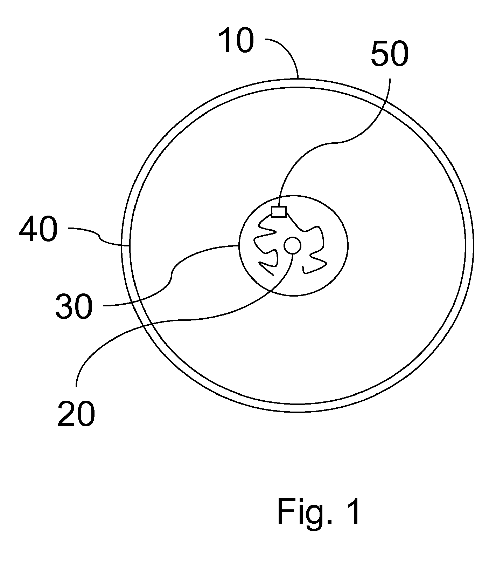

Fig. 1 shows an exemplary embodiment of a disk 10 with a centre hole 20, a surrounding area 30 and a data section 40. An fast accessible memory (FAM) 50, for instance an RFID-transponder or a device accessible by blutooth, is attached to the surrounding area 30. Attachment is achieved by printing a circuit on the disk 10, gluing or adhering a label carrying the FAM 50 on the disk, integrating it into a disk layer or integrating it in-between two sandwiched disk layers (each of the sandwich layers of a BD or (HD-)DVD disk has a thickness of around 0.6 mm), to avoid damage by the user. The FAM 50 may also be realized in more than one layer. Of course, it should be realized such that the centre of mass of disk 10 plus FAM 50 does not depart significantly from the centre of mass of the disk 10 alone.

Another way of attaching the FAM 50 to the disk 10 makes use of printable electronic comprising transparent transistors. A transparent realisation of the FAM 50 allows for placing it even on the data area surface 20 of such a disk 10. Then, the FAM 50 may be larger allowing for an enlarged storage capacity of the FAM 50.

Power supply to the FAM 50 may be achieved in different ways. It is possible to provide the FAM 50 with an active power source. Furthermore, supplying the FAM 50 with power by radio is also possible.

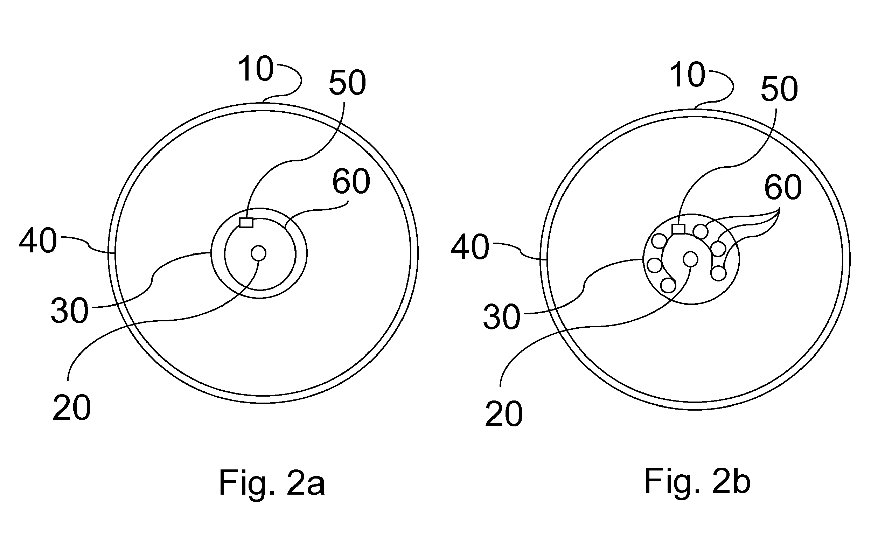

Another way of power provision is depicted in fig. 2a and fig 2b. The reading device provides a magnetic field while the FAM 50 comprises one or more coils 60 placed on the disk surface. Either a single large coil 60 centred around the centre hole 20 is realised at the outer rim of the disk 10 or, as depicted in fig. 2a, in the surrounding area 30 near the boundary to the data section 40. Such coil 60 requires a drive DRV providing a varying magnetic field for power supply. Or, as depicted in fig. 2b, several coils 60 are realised in a non centred way. Then, the drive DRV also may provide a localized static magnetic filed. As soon as the disk 10 is spun up, a current is induced in the coils 60. By means of said current the FAM 50 is supplied with power.

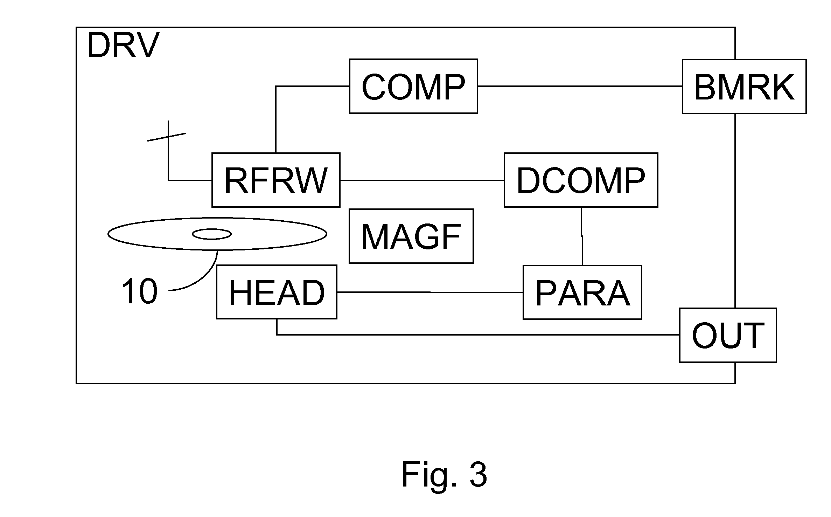

An exemplary embodiment of the inventive drive DRV for accessing content is depicted in fig. 3. Said drive DRV comprises means RFRW for reading and optionally writing to FAM 50 realised as an RFID-transponder attached to disk 10. As soon as the disk 10 starts rotating the magnetic field provided by field generator MAGF induces a current in the coils 60 attached to FAM 50. Then, meta-data can be read from the FAM 50. The read meta-data is decompressed in the decompressing means DCOMP and the decompressed data is used by parameterization means PARA for preparing the reading head HEAD for reading the data section 40 of the disk 10. Then, the HEAD reads content data and the drive DRV outputs the read content data via interface OUT. The drive DRV further comprises means BMRK for reception of a user defined bookmark which are compressed after reception by compressing means COMP and fed into RFID read/write means RFRW for storing the compressed bookmark as part of the meta-data on the FAM 50.

After insertion of the disk 10, the drive DRV reads the FAM 50 while the disk 10 is spun-up. That's possible, because the FAM 50 is wirelessly accessible by means of a radio link. Thus, file system data, disk properties, content menu information, content index and/or user defined bookmarks referencing the content are already available to the player DRV during spinning up. So, the player DRV may be prepared accordingly. Thus, as soon as spinning up is finished the read head HEAD of the player DRV may be positioned at any desired position in the data section 40 and reading of any part of the content may commence.

The disk properties comprised in the FAM 50 consists of, e.g. a type of disk (DVD, HD-DVD, BD, etc.) and/or the number of disk layers. That provides the information necessary for setting-up the optical pick-up in the appropriate read mode as the read-modes for different disk types differ significantly.

If the FAM 50 also covers the file system data, the drive DRV may immediately start reading a menu, like a video menu, after boot up.

If the FAM 50 further comprises the menu as a whole or in parts, the accessing device DRV may even present said menu to a user already during boot-up. So the user gets the impression of playback starting immediately.

If the data section 40 still comprises file system data the storage medium 10 is compatible with state-of-the-art players. Such storage medium 10 also provides the advantageous effect of comprising a backup of the metadata not only carried by the data section 40 but also carried by the FAM 50.

The amount of meta-data carried by the FAM 50 depends on the storage capacity of the FAM 50.

If the storage capacity is sufficient, the FAM 50 may further comprise information which is used to identify the content of the data section 10, e.g. for copy protection purposes.

In a further embodiment, a player key is provided to the FAM 50 via the established radio link. Then, the FAM 50 calculates a key by combining a disk key stored in the FAM 50 with the player key. The resulting key is sent back by the FAM 50 to the player DRV. Then, the player DRV checks validity of the resulting key prior to accessing the data section 40. If the resulting key is invalid, access is denied.

This invention is especially useful for disks 10 with the data section 40 being read-only. Anyway, it is applicable for recordable and re-writable disks, too. At least, the FAM 50 may inform the drive DRV about some general physical parameters, like disk type (DVD, BD, etc.) and/or disk properties (number of layers and sides, diameter, capacity, manufacturer, etc.).

If the FAM 50 is writable, the file system information, menu information and/or content indexing information may be updated after recording and/or editing of data in the data section 40 of recordable or re-writable disks. Furthermore, the user may store individually favoured information, e.g. bookmarks to the content. This is also possible if the disk's data section 40 is read-only. Such bookmarks are accessible by any playback device DRV adapted to read meta-data comprised in the FAM 20.

In order to increase the amount of information the FAM 50 may carry, the meta-data may be compressed. Within file system data there are bytes which are never used. For example, OD sectors have a size of usually 2048 bytes (e.g. DVD, BD). But the most UDF descriptors have a size less than 512 bytes or may be truncated to this size without inducing ambiguities. So, shortened or truncated descriptors may be used. Further compressing methods may be applied to increase the amount of actual payload data carried by the FAM 50.

Given sufficient transmission capacities and power being supplied to the FAM 50 via radio, the accessing device DRV may also analyze the disks in its near area, in order to generate an automatic table of contents of disks 10 in its vicinity.

The meta-data stored in the FAM 50 may be comprised in separately accessible files. For instance, file system data are comprised in a first file. This first file reflects the complete disk file structure as the file system data on the disk's data section 40. Additionally, the FAM 50 emulates a further file, e.g. called "disk.ifo". So, an FAM accessing device RFRW becomes able to read this file before the disk has been boot-up. This enables the device RFRW for getting relevant information required for parameterization of the read head HEAD. This would simplify the access to the disk 10 significantly, especially for PCs, because they may use conventional file system drivers to access to this portion of information.

## Claims

1. Storage medium (10) comprising
- first storage means (40) for carrying content
- second storage means (50) for carrying meta-data wherein
- the meta-data is adapted for preparing a suitable device (DRV) for accessing the content.

2. Storage medium (10) according to claim 1, wherein the meta-data comprises file system information related to the first storage means, boot-up information related to the first storage means and/or an menu information related the content.

3. Storage medium (10) according to claim 1 or 2, wherein the second storage means (50) comprises a transponder and the first storage means comprises a data section (40) of an optical disk.

4. Storage medium (10) according to any of the preceding claims, wherein the second storage means (50) is writable such that a user is allowed to bookmark the content.

5. Storage medium (10) according to any of the preceding claims, wherein the meta-data is compressed.

6. Method for accessing content comprised in a storage medium (10) according to claim 1, said method comprising
- reading the meta-data,
- preparing an accessing device by help of said meta-data and
- accessing the content by help of said prepared accessing device.

7. Method according to claim 6, wherein reading meta-data comprises reading compressed data and decompressing the compressed data.

8. Method according to claim 6 or 7, further comprising the step of storing on said second storage means (50) a user defined reference to the content as part of the meta-data.

9. Method according to any of the preceding claims 6-8, wherein the second storage means (50) comprises a transponder and accessing the transponder comprises establishing a radio link with the transponder.

10. Device (DRV) for accessing a storage medium (10) according to claim 1, said device comprising
- means (HEAD) for accessing the content,
- means (RFRW, DCOMP) for reading the meta-data,
- means (PARA) for preparing said content accessing means (HEAD) by help of said meta-data.

11. Device (DRV) according to claim 10, wherein the second storage means (50) comprises a transponder and the means (RFRW, DCOMP) for reading the meta-data comprises means for establishing a radio link with a transponder.

12. Device (DRV) according to claim 10 or 11, further comprising means (BMRK, RFRW) for storing on said second storage means a user defined reference to the content as part of the meta-data.

13. Device (DRV) according to any of the preceding claims 10-12, wherein the meta-data reading means (RFRW, DCOMP) comprises means for reading compressed data (RFRW) and means (DCOMP) for decompressing the compressed data.
